# EUROPÄISCHE PATENTSCHRIFT

(11) **EP 3 079 883 B1**
(45) Veröffentlichungstag und Bekanntmachung des Hinweises auf die Patenterteilung: **26.02.2020**
(21) Anmeldenummer: 14809623.3
(22) Anmeldetag: 05.12.2014
(51) Int. Cl.: B29C 65/18, B29C 65/20, B29C 65/42, B29C 65/60, B29C 65/78, B29L 31/30

(54) **KUNSTSTOFFSCHWEISSEINRICHTUNG**
PLASTIC-WELDING DEVICE
DISPOSITIF DE SOUDAGE DE MATIÈRE PLASTIQUE

(30) Priorität: 10.12.2013 DE 202013010944 U
(43) Veröffentlichungstag der Anmeldung: 19.10.2016
(73) Patentinhaber: Meichtry, Ralph, 8835 Feusisberg (CH)
(72) Erfinder: BASLER, Beat, CH-8810 Horgen (CH); MEICHTRY, Ralph, CH-8835 Feusisberg (CH)
(74) Vertreter: Rentsch Partner AG
(86) Internationale Anmeldenummer: PCT/EP2014/076773
(87) Internationale Veröffentlichungsnummer: WO 2015/086469

(56) Entgegenhaltungen:
- US-A- 3 013 930

## Beschreibung

### TECHNISCHES GEBIET

Die Erfindung betrifft eine handgehaltene Kunststoffschweisseinrichtung.

### STAND DER TECHNIK

Bei Fahrzeugen mit Parksensoren resp. Abstandssensoren werden diese häufig hinter der Kunststoffverkleidung der Stossstangen angeordnet. Dabei werden Sensorhalterungen aus Kunststoff mittels industriellen Ultraschallschweissverfahren an die Innenseite der Kunststoffverkleidung geschweisst. Muss die Kunststoffverkleidung resp. die Stossstange ersetzt werden, werden die Ersatzteile meist ohne Sensorhalterungen geliefert, so dass die Sensorhalterungen in einer Autowerkstatt angebracht werden müssen. In der Regel verfügen die Autowerkstätte jedoch nicht über die teueren Ultraschallschweissgeräte, so dass die Sensorhalterungen lediglich festgeklebt werden. Problematisch daran ist, dass festgeklebte Sensorhalterungen nicht genügend stark halten und bereits nach kurzer Zeit wieder abfallen können.

Ein Beispiel für eine Vorrichtung bekannt aus dem Stand der Technik ist die US3013930A**,** publiziert am 19.12.1961 von der Narricot Corporation. Diese bezieht sich auf eine Vorrichtung zum Verbinden von zwei sich überlappender Streifenenden umfassend eine Klammervorrichtung und ein Erhitzungswerkzeug. Die Klammervorrichtung umfasst weiter zwei Platten, welche jeweils mindestens ein Loch aufweisen, welches im zusammengebauten Zustand zu dem Loch der anderen Platte ausgerichtet ist. Zwischen den beiden Platten sind die beiden zu verbindenden Enden des Streifens angeordnet. Das Erhitzungsmittel beinhaltet weiter ein Heisseisen mit mindestens einem Stift, welcher durch das mindestens eine ausgerichtete Lochpaar der beiden Platten und durch die dazwischen angeordneten Streifenenden einführbar ist. US 3 013 930 A offenbart: eine Kunststoffschweisseinrichtung zum flächigen Verbinden eines ersten, dünnwandigen Kunststoffteils mit einem zweiten Kunststoffteil, umfassend eine handgehaltene Montagehilfe und einen in einer Halterung eines Handlötkolbens aufnehmbaren Schweisskopf; wobei der Schweisskopf einen Grundkörper und mindestens eine am Grundkörper angeordnete Schweissspitze aufweist; wobei die Montagehilfe mindestens einen Distanzhalter aufweist, der mit seiner Unterseite auf das dünnwandige Kunststoffteil auflegbar ist und auf dessen Oberseite der Grundkörper des Schweisskopfs abstützbar ist; und wobei der mindestens eine Distanzhalter derart ausgebildet ist, dass beim Abstützten des Grundkörpers auf dem mindestens einen Distanzhalter eine Eindringtiefe der mindestens einen Schweissspitze in die zu verbindenden Kunststoffteile auf einen vorbestimmten maximalen Wert begrenzt ist.

### DARSTELLUNG DER ERFINDUNG

Eine Aufgabe der Erfindung ist es, eine handgehaltene Kunststoffschweisseinrichtung zum flächigen Verbinden eines ersten, dünnwandigen Kunststoffteils mit einem zweiten Kunststoffteil zur Verfügung zu stellen, welche kostengünstig in ihrer Herstellung und einfach in ihrer Anwendung ist.

In einer Ausführungsform umfasst die Kunststoffschweisseinrichtung zum flächigen Verbinden eines ersten, dünnwandigen Kunststoffteils mit einem zweiten Kunststoffteil, eine handgehaltene Montagehilfe und einen Schweisskopf, welcher vorzugsweise derart ausgestaltet ist, dass er in eine Halterung eines Handlötkolbens aufnehmbar ist. Der Schweisskopf weist einen Grundkörper und mindestens eine am Grundkörper angeordnete Schweissspitze auf. Die handgehaltene Montagehilfe weist zwei Distanzhalter auf. Zum Schweissen kann die Montagehilfe mit der Unterseite der Distanzhalter auf das dünnwandige Kunststoffteil aufgesetzt werden. Um die beiden Kunststoffteile zu verbinden, wird der Grundkörper des Schweisskopfs auf die Oberseite der Distanzhalter abgestützt. Weiter sind die Distanzhalter derart ausgebildet, dass bei einem seitlichen Abstützen des Grundkörpers auf den Distanzhaltern eine Eindringtiefe der mindestens einen Schweissspitze in die zu verbindenden Kunststoffteile auf einen vorbestimmten maximalen Wert begrenzt ist. Der maximale Werte der Eindringtiefe ist vorzugsweise im Bereich von etwa 2 bis 6 mm.

Zum Verbinden der beiden Kunststoffteile wird das erste, dünnwandige Kunststoffteil an der gewünschten Stelle auf dem zweiten Kunststoffteil positioniert und mit der handgehaltenen Montagehilfe, welche vorzugsweise einen Handgriff aufweist, festgedrückt respektive festgehalten. Die Unterseite der Distanzhalter dient also auch zum Festhalten des ersten Kunststoffteils auf dem zweiten Kunststoffteil. Alternativ kann das erste Kunststoffteil auch mit neben den Distanzhaltern angeordneten Halteelement, z.B. über einen weiter unten erläuterten zentralen Befestigungskörper, festgehalten werden. Der Schweisskopf wird anschliessend mit der mindestens eine Schweissspitze durch den dünnwandigen Bereich des ersten Kunststoffteils in das zweite Kunststoffteil hineingedrückt, bis er mit dem Grundkörper auf den Distanzhalten aufliegt. Dabei sind die Distanzhalter derart ausgestaltet, dass es nur eine vorbestimmte maximale Eindringtiefe der Schweissspitze zulässt, welche abhängig von der Dicke des dünnwandigen Kunststoffteils ist. Bei Hineindrücken der Schweissspitze werden die beiden Kunststoffteile im Bereich der Schweissspitze aufgeschmolzen und miteinander verbunden. Beim Herausziehen des Schweisskopfs ist der Kunststoff im Verbindungsbereich immer noch weich und indem das erste Kunststoffteil immer noch durch die Montagehilfe gehalten wird, kann sich dieses nicht zusammen mit dem Schweisskopf ablösen.

Ein weiterer Vorteil der Distanzhalter besteht darin, dass der Grundkörper des Schweisskopfs, welcher vorzugsweise plattenförmig ausgebildet ist, nicht mit dem ersten Kunststoffteil in Berührung kommt und so ein grossflächiges aufschmelzen verhindert wird. Der Abstand zwischen dem Grundkörper des Schweisskopfs und dem Kunststoffteil beträgt bevorzugt mindestens 0.5 mm.

Die Distanzhalter sind derart voneinander beabstandet angeordnet, dass die Schweissspitze zwischen ihnen hindurchragen kann. Diese können an einem zentralen Befestigungskörper, z.B. in Form einer Strebe oder Befestigungsplatte, befestigt sein. Beispielsweise können die Distanzhalter als Winkeleisen ausgebildet sein, die mit einem Schenkel am zentralen Befestigungskörper befestigt sind. Alternative Formen sind auch möglich. So kann beispielsweise die Strebe oder Befestigungsplatte zwei auskragende, von einander beabstandete Elemente aufweisen, die jeweils an deren einander zugewandten Seite einen Falz aufweisen, welcher jeweils den Distanzhalter ausbildet. Diese auskragenden Elemente dienen können gleichzeitig als Führung für den Grundkörper des Schweisskopfs dienen. Der Schweisskopf kann ebenfalls einen mit dem Falz der Distanzhalter jeweils komplementären Falz aufweisen, um die Stabilität des Schweisskopfs gegenüber der Montagehilfe zu erhöhen.

Die Montagehilfe der Kunststoffschweisseinrichtung kann eine Führung für Schweisskopf aufweisen. Diese wird beispielsweise durch die auskragenden Elemente und/oder die Befestigungsplatte ausgebildet.

Die Montagehilfe weist vorzugsweise einen Handgriff auf. Die handgehaltene Montagehilfe weist zwei zueinander beabstandet angeordnete Distanzhalter auf, diese sind bevorzugt über einen zentralen Befestigungskörper mit dem Handgriff verbunden. Die Montagehilfe kann dabei in der Form in etwa der Gabel eines Hubstaplers gleichen.

Um die Montagehilfe an verschiedene Eindringtiefen anzupassen, können die Distanzhalter lösbar mit dem zentralen Befestigungskörper, resp. der Strebe oder der Befestigungsplatte, verbunden sein, so dass ein einfaches Austauschen von Distanzhaltern mit verschiedenen Dicken (z.B. bei Winkeleisen) resp. mit unterschiedlich dickem Falz möglich ist. Alternativ können zusätzlich Distanzplättchen an der Unterseite der Distanzhalter befestigt werden, um die Eindringtiefe zu verkürzen.

Der Schweisskopf, vorzugsweise aus Stahl oder Kupfer gefertigt, kann einen plattenförmigen Grundkörper mit einer Mehrzahl an Schweissspitzen, z.B. 4, 6, 8 oder 12 Spitzen, aufweisen. Diese können beispielsweise gleichmässig in einer oder mehr Reihen angeordnet sein. Je nach Anwendung sind andere Anordnungen, z.B. radial oder zirkulär, auch möglich. Die Schweissspitzen können zylindrisch, rechteckig, pyramiden- oder trapezförmig ausgebildet sein. Sie können etwa 4 bis 8 mm lang sein und einen Querschnitt von 1-3 mm aufweisen.

Optional kann nach dem Schweissen mit einem Kühlstempel, welcher ebenfalls Teil der Kunststoffschweisseinrichtung sein kann, die Schweissstelle gekühlt und gleichzeitig geglättet werden. Der Kühlstempel weist vorzugsweise einen Kühlkörper aus Aluminium auf, welcher direkt auf die Schweissstelle gedrückt wird. Der Kühlkörper ist beispielsweise derart dimensioniert, dass er zwischen die Distanzelemente resp. die Aussparung im Distanzelement hindurchpasst.

Bei Verbinden von Teilen mit durchgehenden Öffnungen, z.B. eine Halterung eines Abstandssensors an der Innenseite eines Stossfängers resp. der Kunststoffverkleidung einer Stossstange, müssen diese Öffnungen miteinander zentriert werden. Dazu kann die Kunststoffschweisseinrichtung weiter ein Zentrierelement aufweisen, welches im Wesentlichen aus einem Zylinder besteht. Bevorzugt weist der Zylinder beidseitig unterschiedliche Durchmesser auf. Bei Öffnungen der beiden Teile mit gleichen Durchmessern entspricht der erste kleinere Durchmesser des Zylinders dem Durchmesser der Öffnung der beiden Teile. Zum Zentrieren wird das Zentrierelement durch die beiden Öffnungen gesteckt. Das gleiche Zentrierelement kann auch verwendet werden, wenn die beiden Öffnungen der Kunststoffteile unterschiedliche Durchmesser aufweisen, indem die jeweiligen Durchmesser des Zentrierelements den jeweiligen Durchmesser der Öffnungen der beiden Teile entsprechen. Die Zylinderdurchmesser entsprechen dabei den genormten Durchmesser der Sensorhalter und Sensoröffnungen.

Die Kunststoffschweisseinrichtung ist vorzugsweise eine handgehaltene Kunststoffschweisseinrichtung, bei der der Schweisskopf als Lötkolbenaufsatz resp. - einsatz ausgestaltet ist.

Ein Verfahren zum Befestigen eines Sensorhalters mit einem dünnwandigen Befestigungsbereich an der Innenseite der Stossfängerverkleidung kann folgende Schritte umfassen: (a) Bohren eines Loches an der gewünschten Stelle in der Verkleidung. Sofern bereits eine Aussparung vorhanden ist, ist dieser Schritt optional. (b) Positionieren des Sensorhalters mit Hilfe des Zentrierelements. (c) Festhalten des Sensorhalters durch Festhalten des dünnwandigen Bereichs mit Hilfe der Montagehilfe. (d) Zusammenschweissen der beiden Kunststoffteile mit dem Schweisskopf. (e) Entfernen des Schweisskopfs bei weiterem Festhalten des Sensorhalters mittels der Montagehilfe. (f) Abkühlen und Glätten der Schweissstelle mit Kühlstempel (optional). (g) Entfernen der Montagehilfe.

Ein ähnliches Verfahren mit Schweissen und Kühlen kann auch für die Befestigung eines ersten Kunststoffteils an einem beliebigen anderen zweiten Teil (nicht zwingend aus Kunststoff) verwendet werden, wobei das erstes Kunststoffteil mit einem hohlzylinderförmigen Abschnitt durch eine Öffnung des zweiten Teils gesteckt wird. Die Verbindung wird dabei in Form einer Nietverbindung gewährleistet. Um die Nietverbindung herzustellen, wird ein zylindrischer Schweisskopf eingesetzt, welcher an der Unterseite einen in axialer Richtung erhöhten, umlaufenden Rand und mittig eine kegelförmige Spitze aufweist, so dass sich zwischen Spitze und Rand ein um die Achse umlaufendes Tal bildet. Der Schweisskopf kann als Lötkolbenaufsatz resp. -einsatz ausgestaltet sein. Dieser Schweisskopf kann als eigenständige Erfindung betrachtet werden.

Um die Verbindung herzustellen, wird der Schweisskopf mit der kegelförmigen Spitze in den hohlzylinderförmigen Abschnitt des ersten Kunststoffteils gedrückt, so dass sich der hohlzylinderförmige Abschnitt verformt und über den Rand der Öffnung im zweiten Teil ausbreitet. Zur Kühlung der geschweissten Kunststoffniete wird ein Kühlstempel mit einem im Umfang grösserer Kühlzylinder mit planer Unterseite eingesetzt. Auch diese Verfahren zum Kunststoffnieten kann einfach in einer Autowerkstatt eingesetzt werden und zwar ohne Notwendigkeit von teueren Geräten.

Ein weiterer Schweisskopf, welcher geeignet ist, um zwei Kunststoffteile auf Stoss miteinander zu verschweissen, z.B. entlang eines Risses, weist einen zylindrischen Grundkörper mit einer gegenüber der Lötkolbenhalterung geneigten Unterseite. Der Grundkörper mit der geneigten Unterseite weist eine pferdehufartige Form auf. Eine Bohrung zum Einführung des für das Schweissen benötigten Kunststoffs führt seitlich des Zylinders bis zur geneigten Unterseite. Die Öffnung an der Unterseite ist dabei konzentrisch oder exzentrisch angeordnet. In Schweissrichtung vor der Öffnung an der Unterseite weist der Grundkörper eine V-förmige Spitze auf. Während des Schweissvorgangs schmilzt die V-förmige Spitze eine V-Nut zwischen die beiden Kunststoffteile, welche anschliessend mit dem zugeführten Kunststoff gefüllt wird. Dabei entsteht aufgrund der grösseren aufgeschmolzenen Fläche eine besonders saubere und starke Verbindung der beiden Kunststoffteile. Durch die V-förmige Spitze wird zudem augrund des Widerstands gegenüber dem noch ungeschmolzenen Kunststoff auf einfache Weise die Schweissgeschwindigkeit geregelt.

Um dickere Kunststoffteile zu verschweissen oder für einseitiges Verschweissen, kann die V-förmige Spitze zusätzlich eine schwertförmige Verlängerung aufweisen.

Um zwei Kunststoffplatten in einer Ecke zusammenzuschweissen kann die Unterseite des Grundkörpers beidseitig parallel und fluchten mit dem Seiten der V-förmigen Spitze ausgebildet sein, so dass die Spitze und die Seitenflächen der Unterseite in eine formschlüssig in eine rechtwinklige Ecke passen. Im Bereich der Öffnung der Bohrung ist die Unterseite abgeflacht, so dass beim Anlegen in einer Ecke eine Aussparung entsteht, welche beim Schweissen in der Ecke eine schräge Füllung aus Kunststoff bildet.

Anstelle des Zylinders kann der Grundkörper rechteckig ausgebildet sein und der Durchbruch zum Einführen des Kunststoffs kann als Schlitz ausgestaltet sein. An der Unterseite des rechteckigen Grundkörpers kann ebenfalls eine V-förmige Spitze vorgesehen sein. Weiter kann die Unterseite in Schweissrichtung nach dem Schlitz eine bis an den Rand geführte Aussparung aufweisen, zum Auftragen einer Kunststoffschicht auf die Oberfläche der beiden zu verschweissenden Teile.

Als Bedienhilfe um exakt entlang eines Risses zu fahren, kann der Schweisskopf in Schweissrichtung vorne eine in axialer Richtung verlaufende Rille aufweisen. Der Schweisskopf kann als Lötkolbenaufsatz resp. -einsatz ausgestaltet sein. Dieser Schweisskopf mit der V-förmigen Spitze kann als eigenständige Erfindung betrachtet werden.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:
- Fig. 1: eine perspektivische Ansicht eines Schweisskopfs;
- Fig. 2: eine perspektivische Ansicht einer Ausführungsform einer handgehaltenen Montagehilfe;
- Fig. 3: eine Vorderansicht auf eine Montagehilfe mit eingeführten Schweisskopf;
- Fig. 4: eine perspektivische Ansicht eines Handlötkolbens mit eingesetztem Schweisskopf;
- Fig. 5: eine perspektivische Ansicht eines Kühlstempels mit Kühlkörper;
- Fig. 6: eine perspektivische Ansicht eines Zentrierelements;
- Fig. 7: eine perspektivische Ansicht auf eine Montagehilfe der Ausführungsform aus Fig. 2 mit eingeführten Schweisskopf und einem ersten und zweiten Kunststoffteil;
- Fig. 8: eine Vorderansicht der handgehaltenen Kunststoffschweisseinrichtung aus Fig. 7;
- Fig. 9: eine perspektivische Ansicht einer weiteren Ausführungsform einer handgehaltenen Montagehilfe mit eingeführtem Schweisskopf;
- Fig. 10: eine perspektivische Ansicht eines Schweisskopfs zum Kunststoffnieten;
- Fig. 11: perspektivische Ansichten von zwei Varianten eines Schweisskopfs zum Verbinden flächiger Kunststoffteile; und
- Fig. 12: perspektivische Ansichten eines rechteckigen Schweisskopfs.

### WEGEZUR AUSFÜHRUNG DER ERFINDUNG

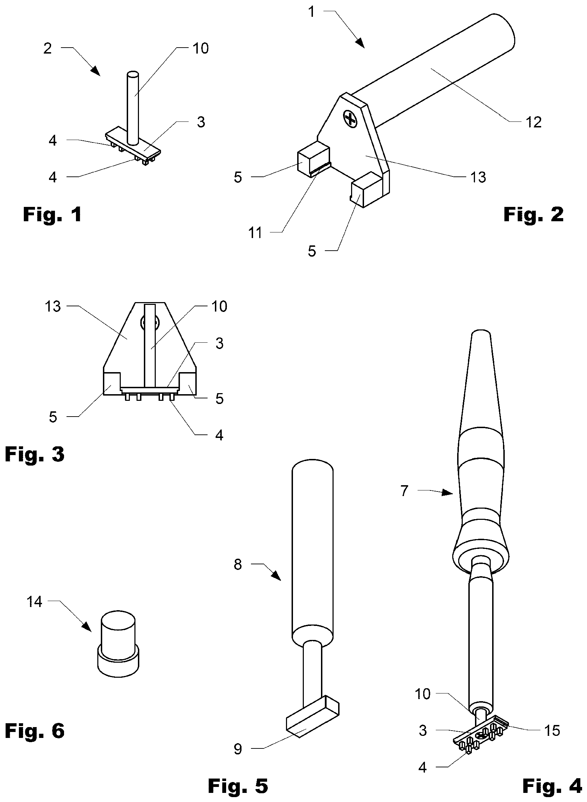

Die Figuren 1 und 2 zeigen eine Schweisskopf 2 (Fig. 1) und eine Montagehilfe 1 (Fig. 2) einer handgehaltenen Kunststoffschweisseinrichtung zum flächigen Verbinden eines ersten, dünnwandigen Kunststoffteils 6 mit einem zweiten Kunststoffteil.

Fig. 1 zeigt eine perspektivische Ansicht eines Schweisskopfs 2 mit einem plattenförmigen Grundkörper 3, welcher an der Unterseite eine Mehrzahl (in der Fig. 1 acht) von Schweissspitzen 4 aufweist, die in zwei Längsreihen angeordnet sind. Andere Anordnungen und eine andere Anzahl an Schweissspitzen sind auch möglich. An der den Schweissspitzen 4 gegenüberliegenden Seite des plattenförmigen, rechteckigen Grundkörpers 3 ist eine zylindrischer Stab 10 zur Aufnahme in einen Handlötkolben 7 vorgesehen. Der gleiche Schweisskopf 1, eingesetzt in einen Handlötkolben 7, ist auch in Fig. 4 in einer Ansicht auf die Unterseite des Grundkörpers 3 gezeigt.

Fig. 2 zeigt eine perspektivische Ansicht einer Ausführungsform einer handgehaltenen Montagehilfe 1. Die Montagehilfe 1 weist einen Handgriff 12 mit einem zentralen Befestigungskörper in Form einer Befestigungsplatte 13. An der Befestigungsplatte 13 sind mit der Unterkante fluchtend zwei voneinander beabstandet angeordnete Distanzhalter 5 lösbar, z.B. über eine Schraubverbindung, befestigt. Distanzhalter 5 sind als auskragende, rechteckige Körper ausgestaltet und weisen an der jeweils dem anderen Distanzhalter zugewandten Seite einen Falz 11 auf. Die Dicke des Falzes zusammen mit der Länge der Schweissspitzen 4 bestimmen die maximale Eindringtiefe der Schweissspitzen 4 in die zu verbindenden Kunststoffteile.

Um abhängig von der Stärke des dünnwandigen, ersten Kunststoffteils 14 die Eindringtiefe zu ändern - bei gleichbleibendem Schweisskopf 2 - können die lösbar befestigten Distanzhalter 5 einfach durch Distanzhalter 5 mit unterschiedliche dick ausgebildetem Falz 11 ausgetauscht werden.

Der Grundkörper 3 des Schweisskopfs 2 weist im gezeigten Beispiel am Rand ebenfalls einen mit dem Falz 11 des Distanzhalters 5 komplementären Falz 15 auf, um die Stabilität des Schweisskopfs 2 gegenüber der Montagehilfe 1 zu erhöhen.

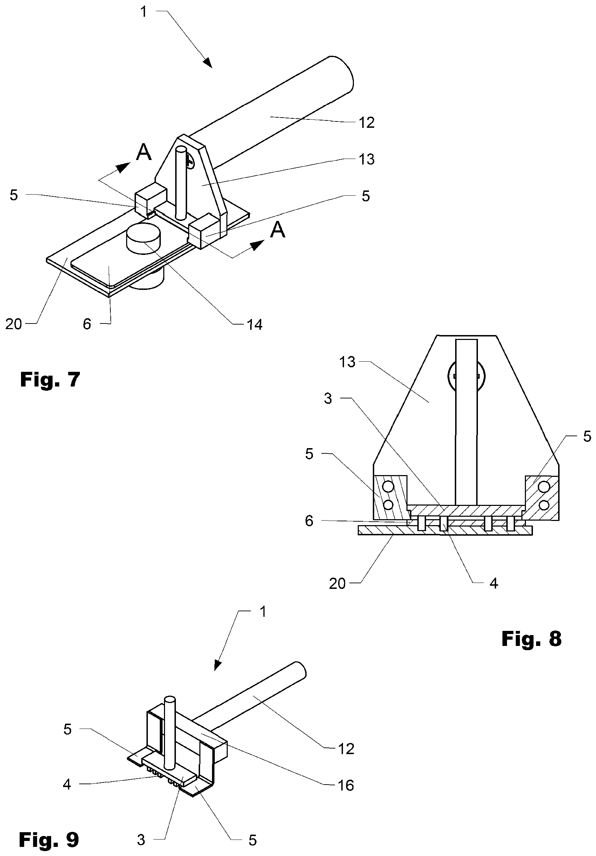

Fig. 3 zeigt eine Vorderansicht auf die Montagehilfe 1 mit eingeführten Schweisskopf 2 der Figuren 1 und 2. Dabei ist erkennbar, wie die Schweissspitzen 4 unterhalb der Montagehilfe 1 hinausragen und zwar in dem Bereich in dem sie beim Schweissen in die beiden Kunststoffteile gedrückt werden. Dies ist auch in Fig. 7 (perspektivische Ansicht) und Fig. 8 (Vorderansicht) gezeigt, wobei in diesen Figuren auch das dünnwandige, erste Kunststoffteil 6 und das zweite Kunststoffteil 20 dargestellt ist. Die Schweissspitzen 4 werden beim Schweissen durch das dünnwandige, erste Kunststoffteil 6 bis in das zweite Kunststoffteil 20 hineingedrückt, wobei der aufgeschmolzene Kunststoff der beiden Kunststoffteile nach dem Erhärten eine stabile Schweissverbindung bilden. In den Figuren 7 und 8 ist zudem erkennbar, dass das erste Kunststoffteil 6 durch die beiden auf dem Kunststoffteil 6 aufliegenden Distanzhalter 5 gehalten werden kann. Die Distanzhalter 5 erfüllt daher die Funktion des Haltens der Kunststoffteile und gewährleisten gleichzeitig eine optimale Eindringtiefe der Schweissspitzen 4.

Fig. 5 zeigt eine perspektivische Ansicht eines Kühlstempels 8 mit Kühlkörper 9. Dieser ist in seiner Längsausdehnung leicht kleiner als der Grundkörper gewählt, so dass er zwischen die Distanzhalter 5 zur Kühlung und zum Zusammenpressen des Materials auf den aufgeschmolzenen Kunststoff gedrückt werden kann. Der Kühlkörper 9 weist eine planare Unterseite auf.

Fig. 6 zeigt eine perspektivische Ansicht eines Zentrierelements 14 um beim Verbinden von Kunststoffteilen mit durchgehenden Öffnungen, z.B. eine Halterung eines Abstandssensors an der Innenseite eines Stossfängers resp. der Kunststoffverkleidung einer Stossstange, die beiden Kunststoffteile miteinander auszurichten. Fig. 7 zeigt ein in eine Öffnung des ersten Kunststoffteils 6 eingesetztes Zentrierelement 14. Das Zentrierelement 14 weist einen Zylinder auf, der beidseitig unterschiedliche Durchmesser hat.

Fig. 9 zeigt eine perspektivische Ansicht einer weiteren Ausführungsform einer handgehaltenen Montagehilfe 1 mit eingeführtem Schweisskopf 2. Im Unterschied zur Montagehilfe aus Fig. 2 weist die Montagehilfe 1 aus Fig. 9 als zentraler Befestigungskörper eine am Handgriff 12 befestigte Strebe 16 auf. An der Strebe sind als Distanzhalter 5 zwei Winkeleisen lösbar, z.B. über eine Schraubverbindung, befestigt. Die maximale Eindringtiefe der Schweissspitzen 4 in den Kunststoff wird über die Dicke der Winkeleisen bestimmt.

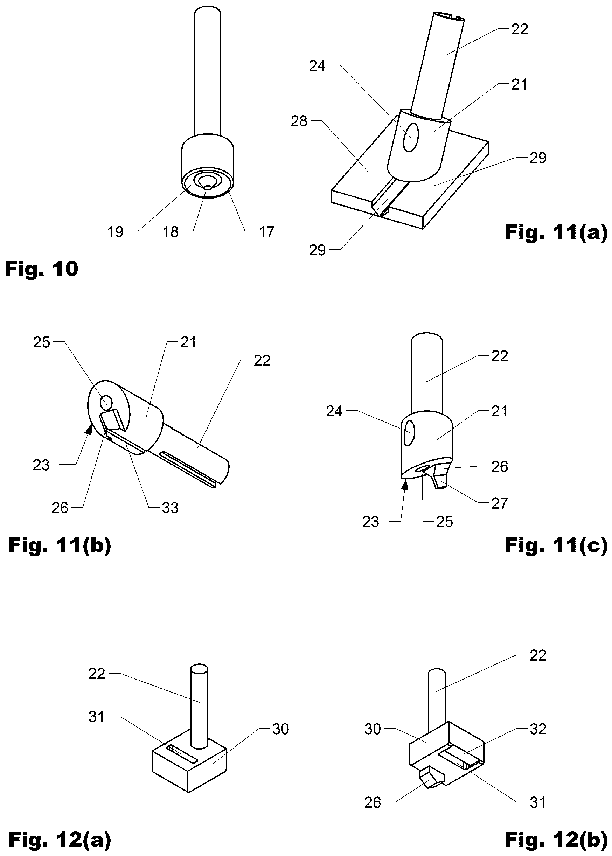

Fig. 10 zeigt eine perspektivische Ansicht eines Schweisskopfs zur Herstellung von Kunststoffnietverbindungen. Der Schweisskopf weist einen zylindrischen Grundkörper auf und ist bevorzugt als Lötkolbenaufsatz resp. -einsatz ausgestaltet. Der zylindrische Grundkörper weist an der Unterseite einen in axialer Richtung erhöhten, umlaufenden Rand 17 und mittig eine kegelförmige Spitze 18 auf, so dass sich zwischen Spitze 18 und Rand 17 ein umlaufendes Tal 19 bildet.

Fig. 11 zeigt eine perspektivische Ansicht zweier Varianten eines Schweisskopfs zum Verschweissen zweier Kunststoffteile. Fig. 11(a) zeigt den Schweisskopf und die zu verschweissenden Kunststoffteile 28, 29 in einer perspektivischen Ansicht von oben (die Ansicht ist für beide Varianten identisch). Figuren 11(b) und 11(c) zeigen eine perspektivische Ansicht von unten auf die Unterseite des Schweisskopfs.

Der Schweisskopf weist eine zylindrischen Grundkörper 21 mit einer gegenüber der Lötkolbenhalterung 22 geneigten Unterseite 23. Der Grundkörper 21 mit der geneigten Unterseite 23 weist eine pferdehufartige Form auf (Fig. 11(a)). In dem Verbindungsbereich der beiden Kunststoffteile 28, 29 ist eine V-Nut dargestellt, welche durch die V-förmige Spitze 26 des Schweisskopfs gebildet wird und mit zugeführtem Kunststoff (nicht gezeigt) gefüllt ist. Der zugeführte Kunststoff und der Randbereich der beiden Kunststoffteile 28, 29 bilden dabei eine starke, haltbare Schweissverbindung.

Eine Bohrung 24 zum Einführung des für das Schweissen benötigten Kunststoffs führt seitlich des zylindrischen Grundkörpers 21 bis zur geneigten Unterseite 23. Die Öffnung 25 der Bohrung 24 an der Unterseite 23 ist dabei exzentrisch angeordnet. In Schweissrichtung vor der Öffnung 25 an der Unterseite 23 weist der Grundkörper eine V-förmige Spitze 26 auf, wie in Figuren 11(b) und 11(c) gezeigt. Während des Schweissvorgangs schmilzt die V-förmige Spitze 26 eine V-Nut zwischen die beiden Kunststoffteile, welche anschliessend mit dem zugeführten Kunststoff gefüllt wird. Dabei entsteht eine besonders saubere und starke Verbindung der beiden Kunststoffteile. Um dickere Kunststoffteile zu verschweissen, kann die V-förmige Spitze 26 zusätzlich eine schwertförmige Verlängerung 27 aufweisen, wie in Fig. 11(c) gezeigt.

Anstelle des Zylinders kann der Grundkörper rechteckig ausgebildet sein und der Durchbruch zum Einführen des Kunststoffs kann als Schlitz ausgestaltet sein. Als Bedienhilfe um exakt entlang eines Risses zu fahren, kann der Schweisskopf in Schweissrichtung vorne eine in axialer Richtung verlaufende Rille aufweisen.

Fig. 12 zeigt perspektivische Ansichten eines Schweisskopfs, der im Unterschied zu den Schweissköpfen aus Fig. 11 einen rechteckigen Grundkörper aufweist. Dabei zeigt Fig. 12(a) eine perspektivische Ansicht des Schweisskopfs von oben und Fig. 12(b) eine perspektivische Ansicht von unten. Anstelle der Bohrung ist ein Schlitz 31 zum Zuführen des Kunststoffs vorgesehen. An der Unterseite des rechteckigen Grundkörpers 30 kann ebenfalls eine V-förmige Spitze 26 vorgesehen sein. Weiter kann die Unterseite in Schweissrichtung nach dem Schlitz 31 eine bis an den Rand geführte Aussparung 32 aufweisen, zum Auftragen einer Kunststoffschicht auf die Oberfläche der beiden zu verschweissenden Teile 28, 29.

Als Bedienhilfe 33 um exakt entlang eines Risses zu fahren, können die Schweissköpfe der Figuren 11 und 12 in Schweissrichtung vorne eine in axialer Richtung verlaufende Rille aufweisen, wie in Fig. 11(b) gezeigt.

### BEZEICHNUNGSLISTE

- 1: Montagehilfe
- 2: Schweisskopf
- 3: Grundkörper
- 4: Schweissspitze
- 5: Distanzhalter
- 6: dünnwandiges Kunststoffteil
- 7: Lötkolben
- 8: Kühlstempel
- 9: Kühlkörper
- 10: zylindrischer Stab
- 11: Falz
- 12: Handgriff
- 13: Befestigungsplatte
- 14: Zentrierelement
- 15: Falz
- 16: Strebe
- 17: umlaufender Rand
- 18: kegelförmige Spitze
- 19: umlaufendes Tal
- 20: zweites Kunststoffteil
- 21: zylindrischer Grundkörper
- 22: Lötkolbenhalterung
- 23: Unterseite
- 24: Bohrung
- 25: Öffnung
- 26: V-förmige Spitze
- 27: schwertförmige Verlängerung
- 28: Kunststoffteil
- 29: V-Nut
- 30: rechteckiger Grundkörper
- 31: Schlitz
- 32: Aussparung
- 33: Bedienhilfe

## Patentansprüche

1. Kunststoffschweisseinrichtung zum flächigen Verbinden eines ersten, dünnwandigen Kunststoffteils (6) mit einem zweiten Kunststoffteil, umfassend eine handgehaltene Montagehilfe (1) und einen in einer Halterung eines Handlötkolbens aufnehmbaren Schweisskopf (2); wobei der Schweisskopf (2) einen Grundkörper (3) und mindestens eine am Grundkörper (3) angeordnete Schweissspitze (4) aufweist; wobei die Montagehilfe (1) zwei Distanzhalter (5) aufweist, die mit ihrer Unterseite auf das dünnwandige Kunststoffteil (6) auflegbar sind und auf deren Oberseiten der Grundkörper (3) des Schweisskopfs (2) abstützbar ist; wobei die Distanzhalter (5) derart ausgebildet sind, dass beim Abstützten des Grundkörpers (3) auf den Distanzhaltern (5) eine Eindringtiefe der mindestens einen Schweissspitze (4) in die zu verbindenden Kunststoffteile auf einen vorbestimmten maximalen Wert begrenzt ist; und wobei die Distanzhalter (5) derart voneinander beabstandet angeordnet sind, dass die mindestens eine Schweissspitze (4) des Schweisskopfs (2) bei einem Abstützen des Grundkörpers (3) auf den Distanzhaltern (5) zwischen den zwei Distanzhaltern (5) platzierbar ist.

2. Kunststoffschweisseinrichtung nach Anspruch 1, **dadurch gekennzeichnet, dass** die Montagehilfe (1) einen zentralen Befestigungskörper mit einem Handgriff (12) aufweist, an dem der mindestens einen Distanzhalter (5) lösbar befestigt ist.

3. Kunststoffschweisseinrichtung nach einem der vorangehenden Ansprüche, **dadurch gekennzeichnet, dass** der Schweisskopf (2) eine Mehrzahl von Schweissspitzen (4) aufweist.

4. Kunststoffschweisseinrichtung nach Anspruch 3, **dadurch gekennzeichnet, dass** der Grundkörper (3) als Platte ausgebildet ist an deren Unterseite (23) die Schweissspitzen (4) angeordnet sind.

5. Kunststoffschweisseinrichtung nach einem der vorangehenden Ansprüche, **dadurch gekennzeichnet, dass** die Kunststoffschweisseinrichtung eine handgehaltene Kunststoffschweisseinrichtung ist.

6. Kunststoffschweisseinrichtung nach einem der vorangehenden Ansprüche, **dadurch gekennzeichnet, dass** die Montagehilfe (1) eine Führung für den Schweisskopf (2) aufweist.

7. Kunststoffschweisseinrichtung nach einem der vorangehenden Ansprüche, **dadurch gekennzeichnet, dass** sie weiter einen Kühlstempel (8) mit einem Kühlkörper (9) umfasst.

8. Kunststoffschweisseinrichtung nach einem der vorangehenden Ansprüche, **dadurch gekennzeichnet, dass** sie weiter ein Zentrierelement (14) umfasst.

9. Kunststoffschweisseinrichtung nach einem der vorangehenden Ansprüche, **dadurch gekennzeichnet, dass** der Schweisskopf (2) als Lötkolbenaufsatz resp. -einsatz ausgestaltet ist.

10. Kunststoffschweisseinrichtung nach einem der vorangehenden Ansprüche, **dadurch gekennzeichnet, dass** der maximale Wert der Eindringtiefe im Bereich von 3 mm bis 6 mm ist.

## Claims

1. Plastic welding device for joining a first, thin-walled plastics part (6) to a second plastics part in a planar manner, comprising a hand-held assembly aid (1) and a welding head (2) which can be accommodated in a holder of a hand soldering iron; wherein the welding head (2) has a base body (3) and at least one welding tip (4) arranged on the base body (3); wherein the assembly aid (1) has two spacers (5) which can be placed with their underside on the thin-walled plastic part (6) and on the upper sides of which the base body (3) of the welding head (2) can be supported; wherein the spacers (5) are designed in such a way that when the base body (3) is supported on the spacers (5), a penetration depth of the at least one welding tip (4) into the plastic parts to be joined is limited to a predetermined maximum value; and wherein the spacers (5) are arranged spaced apart from one another in such a way that the at least one welding tip (4) of the welding head (2) can be placed between the two spacers (5) when the basic body (3) is supported on the spacers (5).

2. Plastic welding device according to claim 1, **characterized in that** the assembly aid (1) has a central fixing body with a handle (1 2) to which the at least one spacer (5) is detachably fixed.

3. Plastic welding device according to any one of the preceding claims, **characterized in that** the welding head (2) has a plurality of welding tips (4).

4. Plastic welding device according to claim 3, **characterized in that** the base body (3) is designed as a plate, on the underside (23) of which the welding tips (4) are arranged.

5. Plastic welding device according to any one of the preceding claims, **characterized in that** the plastic welding device is a hand-held plastic welding device.

6. Plastic welding device according to any one of the preceding claims, **characterized in that** the assembly aid (1) has a guide for the welding head (2).

7. Plastic welding device according to any one of the preceding claims, **characterized in that** it further comprises a cooling plunger (8) with a cooling body (9).

8. Plastic welding device according to any one of the preceding claims, **characterized in that** it further comprises a centering element (14).

9. Plastic welding device according to any one of the preceding claims, **characterized in that** the welding head (2) is designed as a soldering iron attachment or insert.

10. Plastic welding device according to any one of the preceding claims, **characterized in that** the maximum value of the penetration depth is in the range from 3 mm to 6 mm.

## Revendications

1. Dispositif de soudage de matière plastique pour relier de façon plane une première pièce en matière plastique (6) à paroi mince à une deuxième pièce en matière plastique, comprenant une aide au montage portative (1) et une tête de soudage (2) pouvant être logée dans un support d'un piston de brasage à la main ; la tête de soudage (2) comportant un corps de base (3) et au moins une pointe de soudage (4) disposée sur le corps de base (3) ; l'aide au montage (1) comportant deux supports d'écartement (5) pouvant être placés avec leur côté inférieur sur la pièce en matière plastique (6) à paroi mince et sur les côtés supérieurs desquels le corps de base (3) de la tête de soudage (2) peut être supporté; les supports d'écartement (5) étant réalisés de telle sorte qu'en cas de support du corps de base (3) sur les supports d'écartement (5), une profondeur de pénétration de l'au moins une pointe de soudage (4) dans les pièces en matière plastique à relier est limitée à une valeur maximale prédéfinie; et les supports d'écartement (5) étant disposés à une telle distance l'un par rapport à l'autre que l'au moins une pointe de soudage (4) de la tête de soudage (2) en cas de support du corps de base (3) peut être placée sur les supports d'écartement (5) entre les deux supports d'écartement (5).

2. Dispositif de soudage de matière plastique selon la revendication 1, **caractérisé en ce que** l'aide au montage (1) comporte un corps de fixation central avec une poignée (12) sur laquelle l'au moins un support d'écartement (5) est fixé de façon amovible.

3. Dispositif de soudage de matière plastique selon l'une quelconque des revendications précédentes, **caractérisé en ce que** la tête de soudage (2) comporte une pluralité de pointes de soudage (4).

4. Dispositif de soudage de matière plastique selon la revendication 3, **caractérisé en ce que** le corps de base (3) prend la forme d'une plaque au niveau du côté inférieur (23) de laquelle sont disposées les pointes de soudage (4).

5. Dispositif de soudage de matière plastique selon l'une quelconque des revendications précédentes, **caractérisé en ce que** le dispositif de soudage de matière plastique est un dispositif de soudage de matière plastique portatif.

6. Dispositif de soudage de matière plastique selon l'une quelconque des revendications précédentes, **caractérisé en ce que** l'aide au montage (1) comporte un guide pour la tête de soudage (2).

7. Dispositif de soudage de matière plastique selon l'une quelconque des revendications précédentes, **caractérisé en ce qu'**il comprend en outre un tampon de refroidissement (8) doté d'un dissipateur de chaleur (9).

8. Dispositif de soudage de matière plastique selon l'une quelconque des revendications précédentes, **caractérisé en ce qu'**il comprend en outre un élément de centrage (14).

9. Dispositif de soudage de matière plastique selon l'une quelconque des revendications précédentes, **caractérisé en ce que** la tête de soudage (2) est configurée sous la forme d'un attachement sur le piston de brasage sur et/ou d'un insert de piston de brasage.

10. Dispositif de soudage de matière plastique selon l'une quelconque des revendications précédentes, **caractérisé en ce que** la valeur maximale de la profondeur de pénétration est dans la plage de 3 mm à 6 mm.
